# EUROPÄISCHE PATENTSCHRIFT

(11) **EP 0 605 801 B1**
(45) Veröffentlichungstag und Bekanntmachung des Hinweises auf die Patenterteilung: **25.09.1996**
(21) Anmeldenummer: 93119655.4
(22) Anmeldetag: 07.12.1993
(51) Int. Cl.: F16L 37/133, F16L 37/14

(54) **Lösbare Steckverbindung zur Aufnahme eines rohrförmigen Einsteckteils mit einer umlaufenden Halterippe**
Separable plug connection for a tubular plug-in part with a circular support rib
Connexion à emboîture détachable pour une pièce enfichable tubulaire avec une nervure circulaire de support

(30) Priorität: 02.01.1993 DE 4300037
(43) Veröffentlichungstag der Anmeldung: 13.07.1994
(73) Patentinhaber: A. Raymond & Cie, F-38028 Grenoble-Cédex (FR)
(72) Erfinder: Moretti, Erminio, F-38000 Grenoble (FR); D'Aloia, Gaetan, F-38130 Echirolles (FR)
(74) Vertreter: Kirchgaesser, Johannes, Dipl.-Ing.

(56) Entgegenhaltungen:
- EP-A- 0 240 452
- DE-A- 3 143 015
- US-A- 4 632 436
- US-A- 4 844 512
- US-A- 4 856 823

## Beschreibung

Die Erfindung bezieht sich auf eine lösbare Steckverbindung zur Aufnahme eines rohrförmigen Einsteckteils mit einer umlaufenden Halterippe gemäß dem Oberbegriff des Hauptanspruchs. Das Einsteckteil kann hierbei sowohl das Ende eines stabilen Metallrohres sein, welches beispielsweise für Kraftstoffleitungen verwendet wird. Es kann aber auch - genau wie das Aufnahmegehäuse - aus starrem Kunststoff oder anderem gängigen Spritzgußmaterial bestehen, welches in bekannter Weise mit einer Schlauch- oder Rohrleitung verbindbar ist.

Eine derartige Steckverbindung ist beispielsweise aus der **US - A - 4 632 436** bekannt. Die Haltekanten sind hierbei an ihren Enden mit parallelen Haltestegen verbunden, welche durch die Öffnungen der Gehäusewand nach außen geführt und dort untereinander verbunden sind, und zwar an einem Ende durch zwei spitz zusammenlaufende Keilflächen und am anderen Ende durch eine nach außen gewölbte Druckplatte. Um über diese Ha!testege die axialen Haltekräfte auf die Gehäusewand übertragen zu können, sind die Haltestege im Querschnitt etwa gleich stark ausgebildet wie die Haltekanten.

Diese Ausbildung hat offenbar den Nachteil, daß sich die Haltestege beim Eindrücken des Einsteckteils nur mit großem Kraftaufwand durch die konischen Einführflächen des Einsteckteils nach außen drücken lassen. Ebenso muß zum Lösen des Einsteckteils einige Kraft auf die Druckplatte ausgeübt werden, um den Biegewiderstand der Haltestege zu überwinden und diese nach außen zu drücken.

Auch besteht bei der aus der Öffnung der Gehäusewand vorstehenden Druckplatte die Gefahr, daß diese bei Montagearbeiten unbeabsichtigt zusammengedrückt wird und damit die Haltekanten so weit nach außen bewegt werden, daß das Einsteckteil von selbst herausspringen kann.

Aufgabe der Erfindung ist es, die Verbindungsteile so zu gestalten, daß sich das Einsteckteil relativ leicht in das Aufnahmegehäuse eindrücken und ebenso leicht wieder lösen läßt und gleichzeitig eine solide und dauerhafte Steckverbindung erreicht wird, die insbesondere auch im Hochdruckbereich volle Sicherheit bietet.

Eine weitere Aufgabe ist es, durch geeignete bauliche Maßnahmen dafür zu sorgen, daß ein ungewolltes Öffnen der Verbindung - beziehungsweise Lösen des Einsteckteils - vermieden wird.

Diese Aufgabe wird erfindungsgemäß dadurch gelöst, daß die kreisbogenförmigen Haltekanten an ihren Enden über V-förmig zusammengeführte Federstege untereinander verbunden sind, und daß an den Haltekanten nach außen abstehende Stützkörper von solcher Stärke angeformt sind, daß diese im eingebauten Zustand zur axialen Festlegung in entsprechenden Aussparungen der Gehäusewand eintauchen, und daß die Haltekanten mit schrägen Einführflächen versehen sind.

Durch die flexible Federstegverbindung lassen sich die Haltekanten nicht nur beim Einführen des Einsteckteils, sondern auch durch Anlegen der Finger auf die Druckplatten, leicht auseinanderdrücken, so daß das Einsteckteil leicht einführbar und im Bedarfsfall auch schnell und einfach aus der Steckverbindung herauslösbar ist. Durch die Verstärkung der Haltekanten mit Stützkörper sowie deren Einbettung in Aussparungen der Gehäusewand wird außerdem eine enorme Steigerung der Haltekraft erreicht, da die Haltekanten dicht neben den Halterippen des Einsteckteils im Gehäuse abgestützt werden.

Die Montage des Sicherungselements erfolgt durch die entsprechenden Öffnungen der Gehäusewand, so daß der Zusammenbau der gesamten Steckverbindung einfach und kostengünstig durchgeführt werden kann.

Durch die Ausbildung des Öffnungsbereichs nach Anspruch 2 wird weiterhin erreicht, daß die Druckplatten der Verbindungsstege nicht über die Gehäusewand vorstehen und damit vor einem unbeabsichtigten Zugriff geschützt sind.

In der Zeichnung ist ein bevorzugtes Ausführungsbeispiel der Erfindung dargestellt, welches nachfolgend näher erläutert werden soll. Es zeigt
- Fig. 1: ein leeres Aufnahmegehäuse im Längsschnitt,
- Fig. 2: ein Sicherungselement in Vorderansicht,
- Fig. 3: ein Sicherungselement im Schnitt nach Linie III - III in Figur 2,
- Fig. 4: eine zusammengebaute Steckverbindung im Längsschnitt,
- Fig. 5: die gleiche Steckverbindung mit eingeführtem Einsteckteil in Schließstellung,
- Fig. 6: das Sicherungselement vor dem Einführen in die Öffnung des im Schnitt dargestellten Aufnahmeraumes,
- Fig. 7: das gleiche Sicherungselement beim Einführen in den Aufnahmeraum,
- Fig. 8: einen um 90° gedrehten Querschnitt durch den Aufnahmeraum gemäß Linie VIII - VIII in Fig. 5 in Schließstellung der Haltekanten und
- Fig. 9: den gleichen Querschnitt durch den Aufnahmeraum in Öffnungsstellung der Haltekanten.

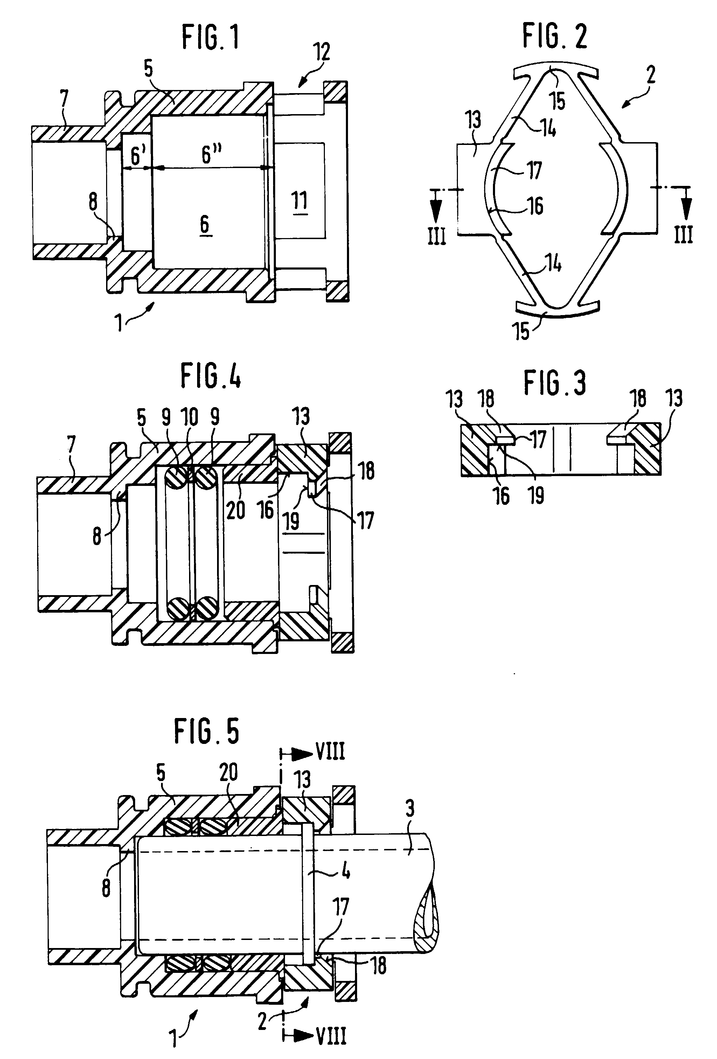

Die in den Figuren dargestellte Steckverbindung besteht aus einem Aufnahmegehäuse **1** (Figur 1) und einem Sicherungselement **2** (Figuren 2 und 3), welches aus hartelastischem Kunststoffmaterial hergestellt ist. Die Steckverbindung dient zur Aufnahme eines rohrförmigen Einsteckteils **3**, welches in Figur 5 dargestellt ist. Dieses Einsteckteil **3** ist mit einer umlaufenden Halterippe **4** versehen und kann sowohl das Ende eines Leitungsrohres aus starrem Werkstoff als auch ein starres Zwischenstück sein, das in bekannter Weise mit dem Ende eines Leitungsrohres aus weicherem Material verbindbar ist.

Das Aufnahmegehäuse **1** besteht gemäß Figur 1 aus einer zylindrischen Gehäusewand **5** mit einem in mehreren Stufen abgesetzten Aufnahmeraum **6** für das Einsteckteil **3**, einem Abschlußring **8** am Ende des Aufnahmeraumes **6** und einem konzentrisch daran angesetzten, zylindrischen Stutzen **7** zum Anschluß an eine nicht dargestellte Verbindungsleitung für Flüssigkeiten. Der Aufnahmeraum **6** beginnt mit einem Bereich **6'**, dessen Innendurchmesser dem Außendurchmesser des Einsteckteils **3** entspricht. Dem schließt sich ein im Durchmesser erweiterter Bereich **6"** an, der zur Aufnahme von zwei Dichtungsringen **9**, einem Zwischenring **10** und einem Distanzring **20** vorgesehen ist (Figur 4), dessen Innendurchmesser wiederum dem Außendurchmesser des Einsteckteils **3** entspricht (Figur 5).

Im vorderen Einführbereich des Aufnahmegehäuses **1** befinden sich in der Gehäusewand **5** zwei diametral gegenüberliegende Öffnungen **11** sowie quer dazu zwei Aussparungen **12**, welche zum Einführen und Festlegen des nachfolgend beschriebenen Sicherungselements **2** in den Aufnahmeraum **6** dienen.

Dieses Sicherungselement **2** setzt sich, wie aus Figur 2 ersichtlich, zusammen aus zwei etwa quaderförmigen Stützkörpern **13**, die an ihren Enden über V-förmig zusammengeführte Federstege **14** untereinander verbunden sind, wobei die Verbindungsstellen mit bogenförmigen Druckplatten **15** abgedeckt sind. Die Stützkörper **13** sind an ihren einander zugekehrten Innenwänden **16** 22 kreisbogenförmig dem Außendurchmesser der Halteripppe **4** angepaßt und weisen zwei radial nach innen gerichtete, kreisbogenförmige Haltekanten **17** mit auf der Einsteckseite abgeschrägten Einführflächen **18** und zur entgegengesetzten Seite radial abgesetzten Halteflächen **19** auf, welche die Halterippe **4** des Einsteckteils 3 im eingedrückten Zustand hintergreifen.

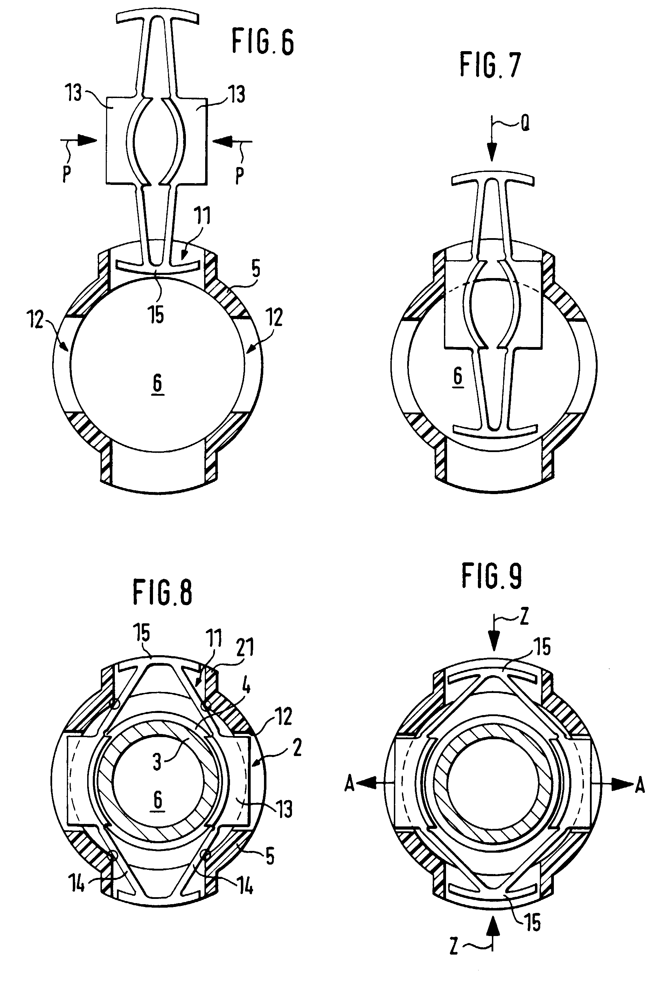

Zum Einführen des Sicherungselements **2** in den Aufnahmeraum **6** werden die Stützkörper **13** zunächst, wie in Figur 6 gezeigt, in Pfeilrichtung "P" zusammengedrückt. Sodann wird das Sicherungselement **2** mit der Druckplatte **15** vorweg in Pfeilrichtung "Q" in die eine Öffnung **11** der Gehäusewand 5 eingeführt und, wie in Figur 7 angedeutet, durch den Aufnahmeraum **6** durchgedrückt. Sobald die Stützkörper **13** die Öffnung **11** passiert haben, streben diese aufgrund der Rückstellkraft der Federstege **14** nach außen und tauchen, wenn sie in der Mitte des Aufnahmeraumes **6** angekommen sind, in die Aussparungen **12** soweit ein, daß sie, wie aus Figur 8 ersichtlich, in axialer Richtung abgestützt sind.

Zwischen den Stegen **14** und der Gehäusewand **5** verbleibt noch genügend Platz, damit die Stützkörper **13** beim Eindrücken des Einsteckteils **3** seitlich ausweichen können. Dies geschieht automatisch dann, wenn die Halterippe **4** beim Eindrücken des Einsteckteils **3** über die Einführflächen **18** gleitet, so daß die Haltekanten **17** nach außen gedrückt werden. Sobald das Einsteckteil **3** mit seiner Stirnseite am Abschlußring **8** des Aufnahmeraumes **6** anstößt, federn die Stützkörper **13** wieder in ihre Ausgangslage zurück und die Haltekanten **17** legen sich mit den Halteflächen **19** an der Rückseite der Halterippe **4** an, so daß das Einsteckteil **3** in der Steckverbindung gesichert ist (Figuren 5 und 8).

Will man die Steckverbindung lösen, so müssen die Druckplatten **15** soweit in Pfeilrichtung "Z" zusammengedrückt werden, bis die Haltekanten **17** weit genug auseinandergeführt sind, daß die Halterippe **4** von den Haltekanten **17** nicht mehr hintergriffen wird. Nun kann das Einsteckteil **3** mühelos aus dem Aufnahmegehäuse **1** herausgezogen werden (Figur 9).

Um ein unbeabsichtigtes Lösen der Steckverbindung zu verhindern, ist die Öffnung **11** in der Gehäusewand **5** ringsum von einem hochgezogenen Rand **21** von solcher Höhe umgeben, daß die Druckplatten **15** im entspannten Verriegelungszustand des Sicherungselements **2** mit dem Rand **21** der Öffnung **11** abschließen.

## Patentansprüche

1. Lösbare Steckverbindung zur Aufnahme eines rohrförmigen Einsteckteils ( 3 ) mit einer umlaufenden Halterippe ( 4 ), bestehend aus einem zylindrischen Aufnahmegehäuse ( 1 ) mit einem zentralen Aufnahmeraum ( 6 ) zum Einführen des Einsteckteils (3) und aus einem separaten Sicherungselement ( 2 ) aus hartelastischem Kunststoff ( 2 ) mit kreisbogenförmig nach innen gerichteten, elastisch auffederbaren Haltekanten ( 17 ) zum Hintergreifen der Halterippe (4) nach dem Eindrücken des Einsteckteils ( 3 ), wobei das Sicherungselement ( 2 ) durch eine Öffnung ( 11 ) in der zylindrischen Gehäusewand ( 5 ) des Aufnahmegehäuses ( 1 ) in den Aufnahmeraum ( 6 ) einführbar, mit den Haltekanten ( 17 ) in axialer Richtung zur Gehäusewand ( 5 ) festlegbar und zum Lösen des Einsteckteils ( 3 ) im Öffnungsbereich ( 11 ) der Gehäusewand ( 5 ) von außen eindrückbar ist, **dadurch gekennzeichnet,** daß die kreisbogenförmigen Haltekanten ( 17 ) an ihren Enden über V-förmig zusammengeführte Federstege ( 14 ) untereinander verbunden sind, und daß an den Haltekanten ( 17 ) nach außen abstehende Stützkörper (13) von solcher Stärke angeformt sind, daß diese im eingebauten Zustand zur axialen Festlegung in entsprechenden Aussparungen ( 12 ) der Gehäusewand ( 5 ) eintauchen, und daß die Haltekanten mit schrägen Einführflächen (18) versehen sind.

2. Steckverbindung nach Anspruch 1, dadurch gekennzeichnet, daß die Verbindungsstellen der Stege (14) von bogenförmigen Druckplatten ( 15 ) abgedeckt sind, welche mit geringem Abstand die Öffnung ( 11 ) der Gehäusewand ( 5 ) ausfüllen, und daß die Öffnung in der Gehäusewand ( 5 ) ringsum von einem hochgezogenen Rand ( 21) solcher Höhe umgeben ist, daß die Druckplatten ( 15 ) im entspannten Verriegelungszustand des Sicherungselements ( 2 ) mit dem Gehäuserand ( 21 ) auf gleicher Ebene abschließen.

## Claims

1. A releasable plug connection for receiving a tubular plug-in part (3) with a peripheral holding rib (4), comprising a cylindrical receiving housing (1) with a central receiving space (6) for insertion of the plug-in part (3) and a separate securing element (2) of hard-elastic plastics material (2) with holding edges (17) which are directed inwardly in the form of a circular arc and which can be elastically sprung open, for engaging behind the holding rib (4) after the plug-in part (3) has been pressed in, wherein the securing element (2) can be introduced into the receiving space (6) through an opening (11) in the cylindrical wall (5) of the receiving housing (1), it can be fixed with the holding edges (17) in the axial direction relative to the housing wall (5) and it can be pressed in from the outside in the opening region (11) of the housing wall (5) for release of the plug-in part (3), characterised in that the arcuate holding edges (17) are connected together at their ends by way of spring limbs (14) which are brought together in a V-shape and that formed on the holding edges (17) are outwardly projecting support bodies (13) of such a size that in the installed condition they engage into suitable apertures (12) in the wall of the housing (5) for axial fixing purposes, and that the holding edges are provided with inclined insertion surfaces (18).

2. A plug connection according to claim 1 characterised in that the connecting locations of the limbs (14) are covered by arcuate pressure plates (15) which with a small spacing fill the opening (11) in the housing wall (5) and that the opening in the housing wall (5) is surrounded by an upstanding rim (21) of such a height that in the released locking condition of the securing element (2) the pressure plates (15) terminate in the same plane with the housing rim (21).

## Revendications

1. Connexion à emboîture détachable pour une pièce enfichable tubulaire (3) avec une nervure circulaire de support (4), se composant d'un boîtier récepteur cylindrique (1) présentant un espace central formant logement (6) pour l'emmanchement de la pièce enfichable (3) et d'un organe de blocage séparé (2) réalisé en matière plastique à cédage élastique dur (2) muni d'arêtes de retenue en forme d'arc de cercle (17) capables de se déformer élastiquement; orientées vers l'intérieur, destinées à venir cramponner par derrière la nervure de support (4) après l'emmanchement en position de la pièce enfichable (3), l'organe de blocage (2) pouvant en l'occurrence être introduit dans l'espace formant logement (6) par une ouverture (11) ménagée dans la paroi du boîtier récepteur cylindrique (5) du boîtier récepteur cylindrique (1), être immobilisé en position par les arêtes de retenue (17) dans le sens axial par rapport à la paroi du boîtier récepteur et être comprimé depuis l'extérieur pour le déblocage de la pièce enfichable (3) dans la zone d'ouverture (11) de la paroi du boîtier récepteur (5), caractérisée en ce que les arêtes de retenue en arc de cercle (17) sont reliées entre elles au niveau de leurs extrémités par l'intermédiaire de lamelles élastiques (14) rapprochées l'une de l'autre en forme de V et que sont réalisés solidaires par moulage des arêtes de retenue (17) des éléments d'appui (13) formant saillie vers l'extérieur, d'une épaisseur telle que ceux-ci, en position d'assemblage, viennent s'encastrer, pour assurer une immobilisation dans le plan axial, dans des évidements (12) ménagés en correspondance dans la paroi du boîtier récepteur (5) et que les arêtes de retenue comportent des surfaces d'introduction obliques (18).

2. Connexion à emboîture détachable selon la revendication 1, caractérisée en ce que les zones de raccordement des lamelles élastiques (14) sont recouvertes par des plaques de compression en forme d'arc de cercle (15) qui avec un intervalle d'écartement très réduit remplissent l'ouverture (11) de la paroi du boîtier récepteur (5) et que l'ouverture du boîtier récepteur (5) est entourée sur tout son pourtour par un rebord surélevé (21) dont la hauteur est telle que les plaques de compression (15), lorsque l'organe de blocage (2) se trouve dans son état détendu de verrouillage, viennent en affleurement du plan du rebord du boîtier (21).
